# EUROPEAN PATENT APPLICATION

(11) **EP 2 772 801 A1**
(43) Date of publication of application: **03.09.2014**
(21) Application number: 14157265.1
(22) Date of filing: 28.02.2014
(51) Int. Cl.: G03B 35/00, G06T 7/00, G01C 11/06

(54) **Matching procedure and device for the digital modelling of objects by stereoscopic images**

(30) Priority: 28.02.2013 IT RM20130115
(71) Applicant: Universit Degli Studi di Roma, 00185 Roma (IT)
(72) Inventor: Nascetti, Andrea, 00165 Roma (IT); Capaldo, Paola, 03032 Arce (IT); Fratarcangeli, Francesca, 03027 RIPI (IT); Pieralice, Francesca, 00137 Roma (IT); Crespi, Mattia Giovanni, 00163 Roma (IT)
(74) Representative: Fiume, Orazio

(57) **Abstract**

Matching procedure for the digital modelling of objects by means of stereoscopic images comprising at least the steps of acquiring a pair of stereoscopic images of an object to be reconstructed, of discretizing the object space according to an elevation direction (Z) and for each primitive" of identifying a better elevation coordinate by means of the application of a similarity criterion to the stereoscopic images acquired.

## Description

### Field of the invention

The present invention relates to a matching procedure and device for the digital modelling of objects by stereoscopic images. This procedure applies in particular to the fields of photogrammetry (with regard to optical images) and radargrammetry (with regard to radar images).

### Prior art

The extraction of "DSMs" (Digital Surface Models) has been the subject of research on the part of the international scientific community due to their wide range of applications. DSMs are used in various applications, such as orthophoto production, spatial and temporal change detection, spatial analyses, data visualisation; They are also an important database from which many secondary products such as level curves, profiles, volumes and dependency models etc. may be obtained.

The technique used is that of the familiar photogrammetry, which employs optical images.

Radargrammetry, on the other hand, uses the same principles as photogrammetry to extract three-dimensional data from non-optical images, but SAR (Synthetic Aperture Radar), employing only the amplitude data of the Radar datum.

In any case, for reconstruction of a three-dimensional datum by means of stereoscopic photography, it is necessary to have available at least one pair of images of the same type, of the same area or depicting the same object.

These pairs of images will hereinafter be referred to as homologous images.

Basically, there are two phases of reconstruction of the 3D datum: A first phase of orientation of the homologous images in space; a second phase of matching, i.e. of recognition of homologous points, that is, which represent the same detail in the two homologous images, and which therefore reconstruct the true 3D datum. More particularly, it is necessary to know and to determine the orientation of the two images in an object reference system, that is, one which is integral with the object, and the search for homologous points on the homologous images, each of which images is associated with its own respective image reference system.

This presupposes knowledge of the type of projection with which acquisition of the images may be modelled geometrically. For example, in the case of two conventional photogrammetric acquisitions (from the ground or from the air), the projection type is central.

The majority of images that are currently used in satellite photogrammetry and in radargrammetry cannot readily modelled with central projection.

Indeed, the images acquired from linear sensors mounted on satellites (and currently also on a number of aerial photogrammetry cameras) have a capture centre for each acquired line, see Poli D. Modelling of spaceborne linear array sensors. PhD Thesis, Swiss Federal Institute of Technology Zurich*.* Moreover, in SAR images it is not possible to identify a capture centre, as the geometry is completely different from that of a central projection. SAR images in zero-Doppler geometry but one example, see P. Capaldo, M. Crespi, F. Fratarcangeli, A. Nascetti, F. Pieralice, "High Resolution SAR Radargrammetry. A first application with COSMO-SkyMed SpotLight Imagery", IEEE Geoscience and Remote Sensing Letters, 8 (6), pp. 1100 - 1104, 2011*.*

For orientation of this type of digital images in space, i.e. to determine the link between the position of a point on the ground and its position on the image, which is not readily modelled by means of a central projection, there is a need to develop suitable models of orientation which take the complex acquisition geometries of the new sensors into account. For each corresponding point pairs (point on the terrain and point on the image), the link is represented geometrically by the line connecting them.

If two images acquired on the same zone are available, it is possible to reconstruct the three-dimensional morphology of the terrain by identifying homologous points which in turn define homologous radii the intersection of which marks the points which describe the above morphology.

Matching is the process which enables recognition (generally automatic) of the homologous point pairs on the two images, i.e. the pairs of images of the same points on the ground that are acquired at the same instant from two different capture points.

This process, for example, may also be performed manually (in this case we more properly speak of collimation) on a few points of interest. However, modern technology aims to implement algorithms capable of automatic recognition of a large number of points. In this way, a plurality of homologous points is obtained and, as has been mentioned, a three-dimensional model of the photographed object is reconstructed.

Such algorithms are very important when models of complex objects are to be reconstructed, such as the surface of the terrain (digital modelling of the terrain).

To perform the matching a primitive, a first point of interest, must be set on one of the two images and the conjugate, or homologous, primitive must then be sought on the other. On the basis of this type of selected primitive, two types of algorithms for the matching may be differentiated: Area Based Matching (ABM) and Feature Based Matching (FBM). In accordance with ABM, a window of pixels is selected as the primitive and, as the similarity criterion, we rely on the value of cross-correlation between the radiance values; where the value is at its maximum, a correspondence can be identified. According to FBM, on the other hand, the features of the image are taken to be the primitives, such as points, angles, edges or even polygons represented on the image.

The major problem, once the primitive has been set on an image, is that of limiting the search for the conjugate, or homologous primitive thereof, so as to successfully achieve an unequivocal and robust recognition. In many cases, the distortions induced in the image and the noise entail false recognitions. It will be understood that the accuracy of three-dimensional reconstruction of the object model is strongly linked to the goodness of the matching process.

One criterion used in particular in various matching techniques is that of progressive refining of the object model, also called the pyramidal method: The resolution of the images deteriorates and a first, "rough" model of the object is extracted, which becomes the input for a successive step in which the resolution of homologous images is greater. Then, for successive steps of refining the object model, one proceeds until one returns to the native resolution of the images and extracts the last and most refined of the models.

One of the most effective of the techniques using a pyramidal approach is the one developed for optical imaging by Zhang and Gruen, see L. Zhang: Automatic Digital Surface Model (DSM) generation from linear array images. PhD Thesis ETH No. 16078, Technische Wissenschaften ETH Zurich, 2005, IGP communication N. 90, 2005, and L. Zhang and A. Gruen, "Multi-image matching for DSM generation from IKONOS imagery". ISPRS Journal of Photogrammetry and Remote Sensing (60), pp. 195-211, 2006. This technique limits the search for homologous points by using geometric ties (Vertical Line Locus) and relies exclusively on the cross-correlation value calculated on the pixel windows (defined on the plane of the image) to determine their correspondence. It also uses a warping procedure which consists in modifying the dimensions and proportions of the windows for the purpose of taking into consideration the small, prospective local deformations.

However, these techniques are not satisfactory in the presence of strong geometric distortions and of a high level of radiometric noise, both of which are induced both by the acquisition process and by the morphology of the object to be modelled. In particular, with regard to the images acquired with Radar sensors, the layover, shadowing and foreshortening are distortions specific to the "slant-range" acquisition geometry and the speckle (granularity) is a typical radiometric noise due to the chaotic combination of the retrodiffuse radar returns contained in the resolution cell itself.

A work by a research group in Graz (Austria), "Forest Assessment Using High Resolution SAR Data in X-Band" published in the journal Remote Sensing 13 April 2011 describes a matching strategy capable of extracting DSM with a high level of accuracy. This technique proves to be among the best-known ones for generating DSM from radar images in accordance with the radargrammetry method, but to be usable it necessitates a crude starting DSM, for example an SRTM (Shuttle Radar Topography Mission) model or ASTER GDEM (ASTER Global Digital Elevation Model).

### Summary of the invention

One aim of the present invention is to provide a unified matching procedure for the digital modelling of objects by means of stereoscopic images acquired by optical sensors or Radar that is capable of overcoming the limitations of the known technique.

A subject of the present invention is a matching procedure for digital modelling objects by means of stereoscopic images acquired by optical or Radar sensors, in accordance with claim 1.

A further aim of the invention is to provide a device capable of generating a digital modelling of objects by means of stereoscopic images acquired by optical or Radar sensors.

The present invention applies in particular to the processing of high-resolution optical or Radar satellite data and of stereoscopic images of any type, including acquired by optical or Radar sensors mounted on non-satellite platforms (for example aerial and terrestrial).

Advantageously, the method that is the subject of the present invention may be applied to optical and Radar images and in no case necessitates a crude starting DSM for it to be usable.

Dependent claims describe preferred embodiments of the invention, forming an integral part of the present description.

### Brief description of the figures

Further features and advantages of the invention will become clearer in the light of the detailed description of preferred, but non-exclusive embodiments of a matching procedure for the digital modelling of objects by stereoscopic images, which is illustrated by way of non-limiting example, with the aid of the attached drawings, wherein:
Fig. 1 conceptually represents the procedure of discretization of the subject according to the present invention,

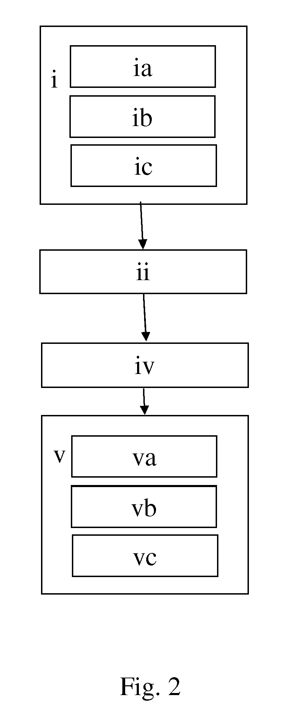

Fig. 2 represents a flow diagram of the method of discretization of the object according to the present invention,
Fig. 3 is a schematic representation of a pyramid method based on the discretization shown schematically in Fig. 1 and represented by the flow diagram in Fig. 2;
Fig. 4 shows a pair of homologous images acquired by an SAR sensor, for example COSMO-Skymed, and used to generate the digital model depicted in Fig. 5,
Fig. 5 shows an example digital model of the digital model of the terrain generated using the invention,
Fig. 6 summarises the numerical results relating to the example shown in Fig. 5.
   The same reference numerals and letters in the drawings identify the same members or components.

### Detailed description of a preferred embodiment of the invention

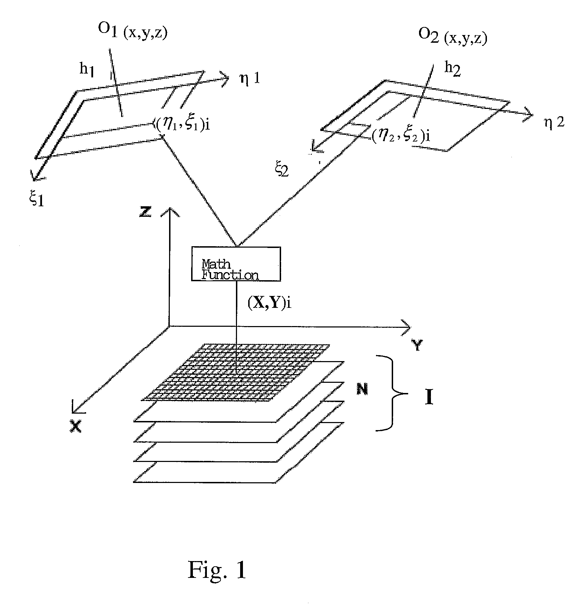

According to the present invention, the following preliminary steps are performed first of all:
1. association
   1.1. of a first 3D reference system (X,Y,Z) with a space containing the object of which the three-dimensional model is to be made (for example the terrain of which the DSM is to be made,
   1.2. of a second 2D reference system (*η*₁,*ξ*₁) with the first image and
   1.3. of a third 2D reference system (*η*₂,*ξ*₂) with the second image;
2. orientation of the stereoscopic images within the object space by means of a method that is known per se: The step comprises generating a transformation function by means of which it is possible to pass from the object coordinates to those of the image, for example, a rational polynomial function the coefficients of which are estimated as described in Rational Polynomial Coefficients - RPCs), see for example M. Crespi, F. Fratarcangeli, F. Giannone, F Pieralice, Chapter 4-Overview on models for high resolution satellites imagery orientation, In: Li D., Shan J., Gong J. (Eds.), Geospatial Technology for Earth Observation data, Springer, Heidelberg, 2009*.*
   Because the shape of the object to be reconstructed in its three dimensions is obviously not known a priori, and because the orientation functions which relate the image reference systems and the image-space reference system to one another do not enable unequivocal identification of a three-dimensional point of the object space (X,Y,Z) starting from one point at a time of each image reference systems, according to the present invention one proceeds as follows:
3. A range is selected on the Z axis, called also the elevation direction, in the object space which presumably contains the object according to the Z axis itself; for example, in the case of the object being the ground, it is a matter of knowing, even very approximately, the minimum and maximum heights of the zone of which the DSM is to be made,
4. this range on the Z axis is discretized, yielding N mutually parallel planes, represented in Fig. 1,
5. a planimetric extension of each plane is also defined, namely, the edges delimiting a grid G, preferably constant or variable between all the planes, on which it is intended to reconstruct the DSM in the object space, and
6. each of the N mutually parallel planes is discretized with a, preferably the same, coarser first grid G, by means of the orientation functions this discretization is projected onto the images, and therefore a correlation is defined between the cells (X,Y) in the grid i-th that are projected onto the images (*η*₁,*ξ*₁)i,(*η*₂,*ξ*₂)i by means of the aforementioned orientation functions; thus are obtained N pairs of homologous projections onto the image planes starting from the respective N parallel planes shown in Fig. 1, corresponding to the aforementioned discretization: thus the whole object space (X,Y,Z) is discretized onto the image planes;
7. at this point a similarity criterion is used for each of the said homologous projections for at least any one primitive, so as to select the pair of homologous projections which better describe this primitive; therefore if at least one primitive is determined in each cell (X,Y)i, this means that the similarity criterion allows identification of a Z coordinate for each cell of the grid G(X,Y).

The order of execution of steps 4 and 5 may be reversed. Whereas the other steps 3 - 7 must be carried out in succession as listed.

At the end of these steps, the other N-1 coordinates not selected may be discarded, thus obtaining a first, approximately three-dimensional reconstruction of the model of the object in space (X,Y,Z).

Therefore the spaciality of the object is reconstructed by discretization of the Z axis and of the corresponding N X,Y plains of the object space and with the aid of a similarity criterion applied to each cell (X,Y)i, in such a way that a single Z coordinate may be associated with each cell.

So various methods can be used for the definition of primitives. For example, in the experiments conducted the above-mentioned Area Based Matching (ABM) method was used, but other methods may be used.

With regard to the application of a similarity criterion, for example, the aforementioned ABM method may be used, wherein N pairs in neighborhoods of each cell are correlated with each other (*η*₁,*ξ*₁)i and (*η*₂,*ξ*₂)i, where as neighborhood is meant a matrix of cells centred on each of the cells (*η*₁,*ξ*₁)i and (*η*₂,*ξ*₂)i under consideration. Obviously a neighborhood may be wide or small as desired.

According to a preferred variant of the method, the cross-correlation coefficients N are calculated, one for each homologous pair of image cells (*η*₁,*ξ*₁)i, (*η*₂,*ξ*₂)i and for each corresponding Z value, on the basis thereof, having calculated the SNR (signal to noise ratio) index, the Z coordinate which exhibits the highest correlation and at the same time exceeds a preset threshold for the SNR value is selected. The method as just described could also rest here, without the application of a pyramidal criterion.

According to a preferred variant of the present invention, the process of matching the images exploits the acquisition geometry as well as an iterative approach of multi-resolution pyramidal type, which allows progressive refinement of the digital model of the object, as achieved by means of the preceding steps.

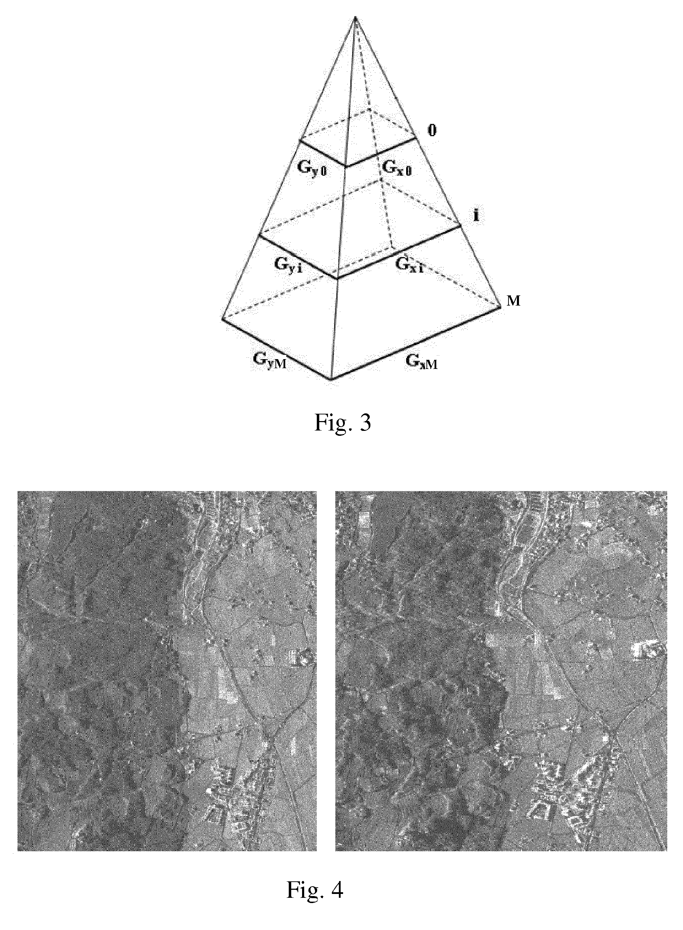

The method therefore comprises the following step A), which may be performed before step 3:
Definition of the number M, see Fig. 3, of pyramidal levels (that is, resolution levels) used for generating the digital model of the object.

The pyramidal criterion provides for gradually incrementing the resolution of the images up to the acquisition resolution, implying that the method previously described, if not combined with a pyramidal criterion, can be performed at any resolution level.

Once the i-th cycle of the method has been executed, for each cell having the corresponding better Z coordinate found in the preceding cycle is considered, at the cycle i+1-th, a range spanning this Z coordinate, and discretized. Analogously, the cell in step i-mo is discretized to the step i+1-th in any new sub-cells contained therein.

The size of the range spanning the Z coordinate and the ratio of the resolutions of two consecutive steps can be identified by means of tuning operations within the capability of the person skilled in the art.

According to the experiments conducted, doubling or tripling the resolution of the cells at each step is preferred whereas, in respect of Z, the size of the discretization range decreases following, for example, a course of the negative exponential type.

Advantageously, the fact of starting from a lower resolution and gradually incrementing it is preferable by virtue of the noise generally present above all in the SAR images, which would impede attainment of the results anticipated on the basis of similarity criteria, by working right from the start with the images as acquired, that is, at the acquisition resolution.

This is equivalent to stating that identification of the Z coordinates of each cell is performed by low-pass filtration both of the images and of the discretization of Z in the object space.

This problem is not present in the optical images and, considering that those with greater expertise in SAR do not coincide with those with greater expertise in the field of optics, even combination of the method according to steps 1 to 7 with a pyramidal criterion is quite other than obvious.

Another advantage of using the pyramidal approach resides in the fact that only in the first cycle is it necessary to find all N homologous pairs relating to all the planes while, in the following cycles, it will be possible to use the Z coordinate information obtained in the preceding cycle, limiting the search. In this way it will be possible to trigger a cycle-on-cycle refinement process of the digital model of the object.

In addition, specifically because the number of cells that are "of interest" reduces by a factor N after the first cycle, it is possible to investigate within relatively wide cell neighbourhoods, since cycle after cycle the cell dimensions reduce in proportion to the increase in resolution.

This is equivalent to saying that the breadth of the search neighbourhoods for the purposes of applying a similarity criterion proves to be a variable parameter during execution of the pyramidal criterion.

It is also worth mentioning that the sub cells that are strictly necessary for completely covering a cell of the immediately preceding cycle are all those associated with the same Z coordinate associated with this cell. Therefore this relationship must be memorised cycle-on-cycle.

In the light of what is been said above, a preferred variant of the method is made up of the following operations:
- preliminary steps:
   11. association
      11.1. of a first 3D reference system (X,Y,Z) with a space containing the object of which the three-dimensional model is to be made (for example the terrain of which the DSM is to be made,
      11.2. of a second 2D reference system (*η*₁,*ξ*₁) with the first image and
      11.3. of a third 2D reference system (*η*₂,*ξ*₂) with the second image;
   12. orientation of the stereoscopic images within the object space by means of a method that is known per se;
   13. definition of the number M, (Fig. 3) of pyramidal levels (that is, resolution levels) used for generating the digital model of the object.
      - steps for each pyramidal level/cycle:
   14. discretization, for example by means of a regular grid G, of one plane of the object space (X,Y,Z), for example the horizontal plane (X,Y); the spatial resolution of the grid is a function of the pyramidal level (Gxi, Gyi), see Fig. 3,
   15. definition of at least one range I (Fig. 1) along an axis perpendicular to the plane discretized in the preceding step, for example along Z;
   16. discretisation of the range I (Fig. 1) defined in the preceding step in a number N of sub-ranges and association of a plane with each thereof, with the result that each of the N planes is identified unequivocally from one of its own Z coordinates;
   17. generation of N pairs of homologous projections onto the images, at the previously defined resolution of the regular grid (Gxi, Gyi), using the functions of the orientation model
   18. definition of the type of primitive to be considered for seeking the homologous points,
   19. selection of the size of the cell neighbourhood (*η*₁,*ξ*₁) and (*η*₂,*ξ*₂), where as neighbourhood is meant a matrix of cell-centred cells (*η*₁,*ξ*₁) or (*η*₂,*ξ*₂) under consideration.
   20. calculation of the correlation coefficient for all N pairs of neighborhoods identified for the cell (X,Y)i corresponding to the cells (*η*₁,*ξ*₁)i and (*η*₂,*ξ*₂)i on the N planes
   21. selection of the maximum correlation value obtained for the cell (X,Y)i and corresponding identification of the value of the Z coordinate in the same cell
   22. repetition of operations 20 and 21 for all the cells (X,Y)i; in this way is constructed the digital model of the object at the pyramidal level The execution of steps 14 to 22 for the M defined pyramidal levels contributes to producing the digital model of the object.

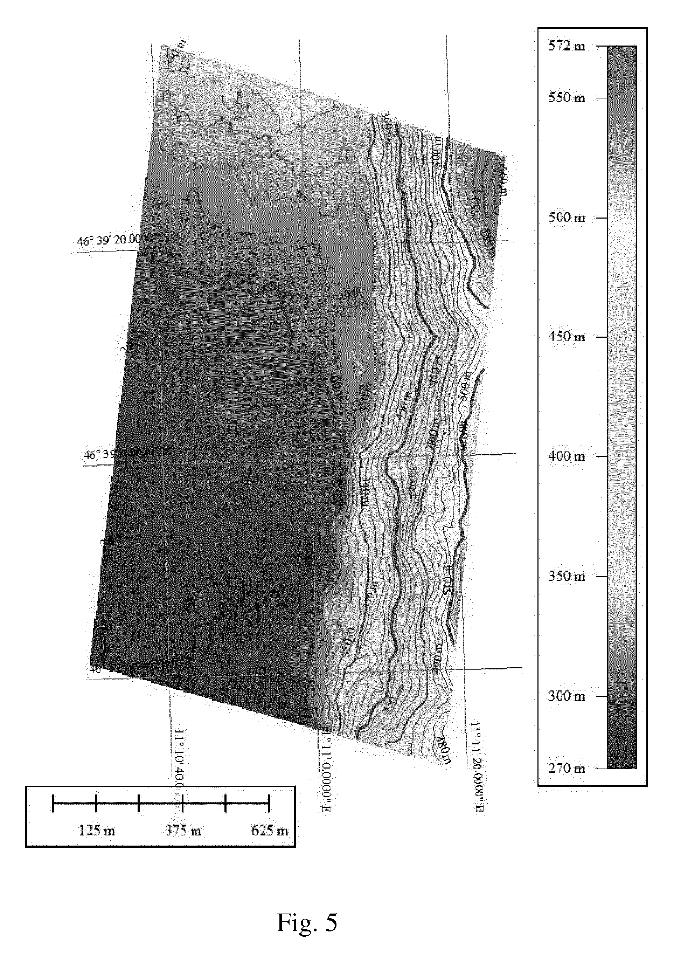

We report the results obtained with a radargrammetry technique from a SAR COSMO-SkyMed SpotLight stereo pair with a resolution on the ground of 1 m, acquired within the Merano region (Italy). The DSM in Fig. 5 was extracted from two images represented in Fig. 4 and validated using a DTM (Digital Terrain Model) LiDAR via the DEMANAL scientific software developed by Prof. K. Jacobsen - Leibniz University in Hannover.

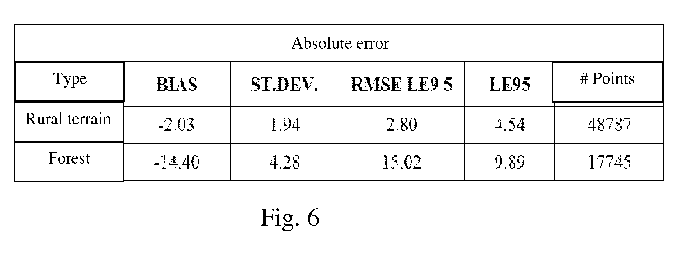

As can be seen, the area selected is characterised by a steep forested region and a flat region, the results are shown in the table in Fig. 6. The accuracy achieved in terms of root mean square error (RMSE) is of the order of 3 m within the agricultural areas with a systematic error (BIAS) and a standard deviation of approximately 2 m. Within the forested area, the value for the bias is approximately 15 m and represents the median height of the tree canopy; in the comparison, the DSM extracted from the SAR images, thus comprising all the features present on the terrain, is compared with the digital model of the elevation on the ground (i.e. at the level of the terrain beneath the trees).

The present invention may therefore be advantageously achieved by means of a computer program which comprises codification means for achieving one or more steps of the method, when this program is executed on a computer. Therefore it is intended that the scope of protection be extended to said computer programme, and also to means readable by computers which comprise a registered message, said means readable by computers comprising programme-codification means for achieving one or more steps of the method, when said programme is executed on a computer.

From the description given above, the person skilled in the art is capable of achieving the object of the invention without introducing further constructional details. The members and the features illustrated in the various preferred embodiments may be combined with one another without exceeding the sphere of protection of the present application.

## Claims

1. A matching procedure for digital modelling of objects by stereoscopic images, comprising at least the following steps:
- (ia) acquiring a pair of stereoscopic images of an object to reconstruct,
- (ib) associating a first 3D reference system (XYZ) with an object space containing an object, a second 2D reference system (η1, ξ1) with a first image and a third 2D reference system (η2, ξ2) with a second image of said pair of stereoscopic images;
- (ic) generating a transformation function adapted to allow a conversion of coordinates from the first 3D reference system to said second and third 2D reference systems;
- (ii) first discretization of the space containing the object according to an elevation direction (Z)
- (iii) identification of planes (X, Y) parallel to each other, perpendicular to said elevation direction (Z) and corresponding to said first discretization,
- (iv) second discretization of each of said planes (X, Y) by a grid (G),
- (v) for each plane (X, Y) of the object space:
- (va) projecting said second discretization in said second and third reference systems by said transformation function, thereby obtaining pairs of homologous projections of the grid (G), and
- (vb) application of a similarity criterion for each of said pairs of homologous projections for at least one primitive,
- (vc) selecting a pair of homologous projections that better describes said primitive according to said similarity criterion.

2. A procedure according to claim 1, wherein said pair of homologous projections corresponds to a specific coordinate on said elevation direction (Z).

3. A procedure according to claims 1 or 2, wherein said grid (G) has constant or variable shape and dimension between said planes (X, Y).

4. A procedure according to one of the preceding claims, further comprising a step of (iia) selecting a range of the elevation direction (Z) in the object space which contains the object according to the elevation direction (Z) itself.

5. A procedure according to one of the preceding claims, wherein said selection of a pair of homologous projections, which better describes said primitive, comprises a step of (vi) identifying a pair of homologous cells ((η1, ξ1)i, (η2, ξ2)i) with the corresponding coordinate on said elevation direction (Z) and a step of (vii) rejecting the remaining pairs of homologous planes.

6. A procedure according to one of the preceding claims, comprising a step of selecting a primitive for each cell in the grid (G) and a consequent repetition of steps (vb) and (vc).

7. A procedure according to one of the preceding claims, wherein said similarity criterion comprises the calculation of a Signal to Noise Ratio (SNR) index and wherein said pair of cells ((η1, ξ1)i, (η2, ξ2)i) identified, which better meets said similarity criterion, has a higher correlation with respect to corresponding homologous pairs of cells projected by the other parallel planes.

8. A procedure according to claim 7, wherein a pair of cells ((η1, ξ1)i, (η2, ξ2)i) is only considered when said signal to noise ratio SNR index exceeds a preset threshold.

9. A procedure according to one of the preceding claims, comprising a preliminary step of reducing resolution of the stereoscopic images.

10. A procedure according to claim 6, comprising the step of applying a pyramidal criterion to steps from (ii) to (vii), progressively increasing the resolution of the stereoscopic images up to the acquisition resolution of the images themselves and setting a coordinate and corresponding homologous cells ((η1, ξ1)i, (η2, ξ2)i) obtained at the previous step as starting elevation coordinate.
